(19) Europäisches Patentamt / European Patent Office / Office européen des brevets

(11) **EP 1 857 491 A1**

(12) **EUROPEAN PATENT APPLICATION**
published in accordance with Art. 158(3) EPC

(43) Date of publication:
**21.11.2007 Bulletin 2007/47**

(51) Int Cl.:
*C08J 3/12* (2006.01)    *C08F 6/22* (2006.01)

(21) Application number: **05816772.7**

(86) International application number:
**PCT/JP2005/022819**

(22) Date of filing: **13.12.2005**

(87) International publication number:
**WO 2006/092898 (08.09.2006 Gazette 2006/36)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.02.2005  JP  2005052856**

(71) Applicant: **Kaneka Corporation**
**Kita-ku**
**Osaka-shi, Osaka 530-8288 (JP)**

(72) Inventor: **UEDA, Takashi**
**Kakogawa-shi, Hyogo, 6750301 (JP)**

(74) Representative: **Vossius & Partner**
**Siebertstrasse 4**
**81675 München (DE)**

(54) **PROCESS FOR PRODUCING COAGULATED LATEX PARTICLE**

(57)    An object of the present invention is to provide a novel granulating process capable of suppressing secondary aggregation and generation of fine particles of a polymer latex under wide temperature conditions without degrading the original quality possessed by a polymer itself, and recovering desired coagulated latex particles in high yield. A process for producing coagulated latex particles includes spraying or adding dropwise a polymer latex containing a water-soluble polymer compound having a physical gel-forming property into an aqueous phase containing an inorganic salt and/or an acid, and a dispersant.

**Description**

Technical Field

The present invention relates to a process for producing coagulated latex particles. In more detail, the present invention relates to a process for producing coagulated latex particles from a polymer latex in high yield.

Background Art

In order to recover a polymer from a polymer latex prepared by emulsion polymerization or suspension polymerization, granulating processes for coagulating and granulating the latex are required. In general, polymers are recovered by granulation from polymer latices by the following procedure: A coagulant is added to a polymer latex at a temperature sufficiently lower than the softening temperature of the polymer to form coagulated latex particles. The resulting mixture is then heated to at least the softening temperature of the polymer to produce slurry, followed by dehydrating and drying. Thus, the polymer is recovered as granulated powder. In this process, the reason for setting the temperature of addition of a coagulant to be sufficiently lower than the softening temperature of the polymer is to suppress secondary aggregation between the resulting coagulated latex particles. In general, addition of the coagulant at a temperature equal to or higher than the softening temperature of the polymer frequently forms coarse coagulated latex particles due to secondary aggregation. In the worst case, the system may be completely agglomerated.

To overcome this problem, it is known that granulating processes such as a gas-phase coagulation process (for example, see Patent Document 1), a moderate coagulation process (for example, see Patent Document 2), and a granulating process using a spray dryer are used as granulating processes for a polymer latex, the granulating processes being capable of producing coagulated particles having satisfactory powder properties. Even when these processes are used, granulation is preferably performed at a temperature side lower than the polymer softening temperature from the viewpoint that secondary aggregation is suppressed. For this purpose, granulation is generally performed at a temperature close to or lower than the polymer softening temperature.

However, a lower temperature is not always preferred in the granulation process. When the granulation temperature is set to a temperature excessively lower than the polymer softening temperature, the mechanical strength of the resulting coagulated latex particles tends to decrease. Consequently, a large amount of fine particles are produced, which may result in a process trouble such as clogging of a filter cloth.

That is, in the known granulation processes, in order to obtain coagulated latex particles having a desired particle size in high yield, it is important to suppress both secondary aggregation and generation of fine particles. For this purpose, it is essential to perform an operation in a granulation temperature range (generally, from about the polymer softening temperature to a temperature about 10°C lower than the polymer softening temperature) in which the influences of both are minimized. However, when the granulation temperature is fluctuated by various factors in the production process, the yield is decreased by second aggregation or a trouble such as degradation of filtering property is caused by generation of fine particles, thus causing problems in production.

In addition, the composition of a polymer that can be recovered is also limited in the known granulation processes. With respect to flexible polymer latices having a polymer softening temperature of 0°C or lower, it is difficult to set the temperature of the system to the optimum granulation temperature range as long as water is used as a medium. Thus, coagulated latex particles cannot be obtained in high yield.

In addition to the above-described granulation technologies, a known process for granulating a rubbery polymer latex which has a polymer softening temperature of room temperature or lower and which is secondarily aggregated extremely easily and is difficult to granulate is a process of adding a high-molecular-weight polyanion having a carboxyl group and/or a hydroxyl group in its molecule to a rubber latex, and adding dropwise the mixed latex to an aqueous solution containing at least one alkaline earth metal (for example, see Patent Document 3).

In this process, however, for example, at least 2 to 8 parts by weight and preferably 4 to 6 parts by weigh of the high-molecular-weight polyanion must be added relative to 100 parts by weight of rubber solid content in the rubber latex, the viscosity of the resulting mixed latex must be adjusted to 200 to 8,000 mPa·s, and subsequently the mixed latex must be added dropwise from 1 to 80 cm higher than the liquid level of a coagulant. In this way, it is described that satisfactory spherical coagulated latex particles cannot be produced unless many conditions are satisfied.

In general, it is easily supposed that the addition of 2 parts by weight or more of a high-molecular-weight polyanion to a polymer latex causes the following problems: (1) The original quality (for example, thermal stability) possessed by a recovered polymer itself used for various purposes may be deteriorated; (2) The addition of a large amount of high-molecular-weight polyanion leads to significant increase in the production cost; and (3) Since the viscosity of the latex, which is generally 10 mPa·s or less, must be adjusted to 200 mPa·s or more and preferably 1,000 mPa·s or more by adding the high-molecular-weight polyanion, the liquid transferring property of the resulting latex is impaired. Thus, this is not a satisfactory process.

That is, under the present situation of the field of granulation of polymer latices, it has been still expected to develop a granulating technique capable of suppressing secondary aggregation and generation of fine particles under as wide a temperature condition as possible without degrading the original quality possessed by the polymer itself, and recovering the desired coagulated latex particles in high yield.

Patent Document 1 : Japanese Unexamined Patent Application Publication No. 53-30647
Patent Document 2: Japanese Unexamined Patent Application Publication No. 60-217224
Patent Document 3: Japanese Unexamined Patent Application Publication No. 52-37987

Disclosure of Invention

Problems to be Solved by the Invention

In order to solve the above problems, it is an object of the present invention to provide a novel granulating process capable of suppressing secondary aggregation under wide temperature conditions without degrading the original quality possessed by a polymer itself, and recovering desired coagulated latex particles in high yield.

Means for Solving the Problems

In view of the above-described present situation, the present inventors have conducted intensive research and found that by spraying or adding dropwise a specific polymer latex into an aqueous phase containing a coagulant (gelling agent) and a dispersant, secondary aggregation can be suppressed under wide temperature conditions without degrading the original quality possessed by the polymer itself and desired coagulated latex particles can be recovered in high yield. Consequently, the present invention has been accomplished.

The present invention relates to a process for producing coagulated latex particles including spraying or adding dropwise a polymer latex containing a water-soluble polymer compound having a physical gel-forming property into an aqueous phase containing an inorganic salt and/or an acid, and a dispersant.

A preferred embodiment relates to the above-described process for producing coagulated latex particles, wherein 0.01 to 3.0 parts by weight of the water-soluble polymer compound having a physical gel-forming property is contained in the polymer latex containing 100 parts by weight of the polymeric solid content.

A preferred embodiment relates to the above-described process for producing coagulated latex particles, wherein 0.05 to 1.8 parts by weight of the water-soluble polymer compound having a physical gel-forming property is contained in the polymer latex containing 100 parts by weight of the polymeric solid content.

A preferred embodiment relates to any one of the above processes for producing coagulated latex particles, wherein the aqueous phase contains 0.001 to 10 parts by weight of the dispersant relative to 100 parts by weight of the polymeric solid content in the polymer latex.

A preferred embodiment relates to any one of the above processes for producing coagulated latex particles, wherein the aqueous phase contains 0.2 to 20 parts by weight of the inorganic salt and/or the acid relative to 100 parts by weight of the polymeric solid content in the polymer latex.

A preferred embodiment relates to any one of the above processes for producing coagulated latex particles, wherein the water-soluble polymer compound having a physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

A preferred embodiment relates to any one of the above processes for producing coagulated latex particles, wherein the dispersant is a nonionic polymer surfactant and/or an anionic surfactant.

A preferred embodiment relates to the above-described process for producing coagulated latex particles, wherein the nonionic polymer surfactant is at least one compound selected from partially saponified poly(vinyl alcohol), polyacrylic acid and salts thereof, methylcellulose, hydroxymethylcellulose, hydroxyethylcellulose, polyalkylene oxides, poly(vinyl pyrrolidone), poly(vinylimidazole), acrylamide, and sulfonated polystyrene.

A preferred embodiment relates to the above-described process for producing coagulated latex particles, wherein the anionic surfactant is at least one compound selected from carboxylates, sulfonates, sulfate ester salts, and phosphate ester salts.

A preferred embodiment relates to any one of the above processes for producing coagulated latex particles, wherein the inorganic salt is at least one salt selected from sodium salts, potassium salts, calcium salts, magnesium salts, aluminum salts, iron salts, barium salts, zinc salts, copper salts, potassium alum, and iron alum. A preferred embodiment relates to any one of the above processes for producing coagulated latex particles, wherein the acid is at least one inorganic acid selected from hydrochloric acid, sulfuric acid, nitric acid, and phosphoric acid and/or at least one organic acid selected from acetic acid and formic acid.

A preferred embodiment relates to any one of the above processes for producing coagulated latex particles, wherein the water-soluble polymer compound having a physical gel-forming property is a water-soluble alginic acid derivative.

A preferred embodiment relates to the above-described process for producing coagulated latex particles, wherein the inorganic salt is a calcium salt.

A preferred embodiment relates to any one of the above processes for producing coagulated latex particles, wherein droplets of the polymer latex sprayed or added dropwise have a volume-average droplet size of 50 $\mu$m to 5 mm.

A preferred embodiment relates to any one of the above processes for producing coagulated latex particles, wherein the polymer latex has a polymeric solid content of 10 to 55 percent by weight.

Effects of the Invention

According to the process for producing coagulated latex particles of the present invention, secondary aggregation can be suppressed in a granulation process under wide temperature conditions without degrading the original quality possessed by a polymer itself, and thus coagulated latex particles having a desired particle size can be produced in high yield.

Best Mode for Carrying Out the Invention

The polymer latex usable in the present invention is not particularly limited. For example, polymer latices produced by emulsion polymerization, suspension polymerization, microsuspension polymerization, miniemulsion polymerization, or aqueous dispersion polymerization can be used. Among these, from the viewpoint that structures can be easily controlled and coagulated latex particles having satisfactory powder properties can be obtained, polymer latices produced by emulsion polymerization are preferably used.

With respect to polymer latices produced by the above methods, examples of polymer particles contained therein include particles of (1) a polymer latex prepared by polymerizing a monomer mixture including 50 to 100 percent by weight of an acrylic ester, 0 to 60 percent by weight of a methacrylic ester, 0 to 40 percent by weight of an aromatic vinyl monomer, 0 to 30 percent by weight of a vinyl monomer copolymerizable with the acrylic ester, the methacrylic ester, and the aromatic vinyl monomer, and 0 to 5 percent by weight of a multifunctional monomer and (2) a polymer latex prepared by polymerizing a monomer mixture including 50 to 100 percent by weight of butadiene, 0 to 40 percent by weight of an aromatic vinyl monomer, 0 to 30 percent by weight of a vinyl monomer copolymerizable with butadiene and the aromatic vinyl monomer, and 0 to 5 percent by weight of a multifunctional monomer. These polymer latices can be preferably used because of a reason described below. The particle structure of the polymer in any one of these polymer latices may be a graft polymer having a layered structure with a single layer or two or more layers within the exemplified composition ratio and is not particularly limited.

Typical processes for producing the above-described polymer latices are described in detail in, for example, Japanese Unexamined Patent Application Publication Nos. 2002-363372 and 2003-119396, but are not limited thereto.

The polymer latices described above are preferably used because such polymer latices have been widely used as quality modifiers for thermoplastic resins, and their various effects of improving quality can be exhibited even when the polymer latices are recovered as coagulated latex particles of the present invention. However, polymer latices usable in the present invention are not limited to these. For example, latex particles of a polymer prepared by copolymerization or graft polymerization of a monomer composition mainly composed of at least one monomer selected from the following monomer group may be used alone or as a mixture. Examples of the monomer group include, but are not limited to, (1) alkyl acrylates containing an alkyl group having up to 10 carbon atoms, such as methyl acrylate, ethyl acrylate, butyl acrylate, and 2-ethylhexyl acrylate; (2) alkyl methacrylates containing an alkyl group having up to 10 carbon atoms, such as methyl methacrylate, ethyl methacrylate, butyl methacrylate, and 2-ethylhexyl methacrylate; (3) vinylarenes such as styrene, $\alpha$-methylstyrene, monochlorostyrene, and dichlorostyrene; (4) vinylcarboxylic acids such as acrylic acid and methacrylic acid; (5) vinyl cyanides such as acrylonitrile and methacrylonitrile; (6) vinyl halides such as vinyl chloride, vinyl bromide, and chloroprene; (7) vinyl acetate; (8) alkenes such as ethylene, propylene, butylene, butadiene, and isobutylene; and (9) multifunctional monomers such as allyl methacrylate, diallyl phthalate, triallyl cyanurate, monoethylene glycol dimethacrylate, tetraethylene glycol dimethacrylate, divinylbenzene, and glycidyl methacrylate.

The average particle size of the polymer particles is not particularly limited. However, polymer particles having a volume-average particle size of 0.01 to 15 $\mu$m, which are produced by typical emulsion polymerization, suspension polymerization, or the like, can be preferably used. The volume-average particle size of the polymer particles may be measured with, for example, a MICROTRAC UPA (manufactured by NIKKISO Co., Ltd.).

The polymeric solid content in the polymer latex of the present invention is not particularly limited as long as an object of the present invention is achieved but is preferably 10 to 55 percent by weight and more preferably 20 to 45 percent by weight. When the polymeric solid content in the polymer latex is less than 10 percent by weight, a large amount of water is necessary for reducing the solid content from 30 to 40 percent by weight, which is a polymeric solid content on completion of typical emulsion polymerization or suspension polymerization, to less than 10 percent by weight. Consequently, the load of wastewater treatment tends to increase. On the other hand, a solid content of the polymer latex exceeding 55 percent by weight does not particularly affect the granulation process of the present invention. However, in such a case, the polymerization operation tends to be difficult. For example, the heat generation in polymerization is difficult to control or scales are frequently produced in a polymerization tank. The polymeric solid content in a polymer latex can be measured by placing 0.5 g of the latex in a hot air convection dryer at 120°C for 3 hours to volatilize moisture and then calculating the polymeric solid content in the latex from the weight of the latex before drying and the weight of the polymer after drying.

In the present invention, a polymer latex containing a water-soluble polymer compound having a physical gel-forming property is sprayed or added dropwise in an aqueous phase containing an inorganic salt and/or an acid, and a dispersant to produce coagulated latex particles. In the present invention, it is necessary that a water-soluble polymer compound having a physical gel-forming property is incorporated in a polymer latex and a dispersant is incorporated in an aqueous phase containing a coagulant (gelling agent) for spraying or adding dropwise the polymer latex. The object of the present invention can be achieved only by the complementary effect of these.

In the present invention, a purpose of adding a water-soluble polymer compound having a physical gel-forming property to a polymer latex is as follows: When polymer latex droplets are sprayed or added dropwise in an aqueous phase containing a coagulant (gelling agent), in the polymer latex droplets, coagulation of latex particles proceeds and gelation of the water-soluble polymer compound also simultaneously proceeds, thereby stabilizing the shape of the latex droplets. Furthermore, the water-soluble polymer compound having a physical gel-forming property can contribute to some extent to the effect that the latex droplets smoothly enter the aqueous phase solution from the surface of the aqueous phase solution.

However, if only a water-soluble polymer compound having a physical gel-forming property is incorporated in the polymer latex, the latex droplets easily stay in the vicinity of the surface of the aqueous phase solution when entering the aqueous phase, and thus secondary aggregation frequently occurs by coalescence due to collisions between the latex droplets in the vicinity of the surface of the aqueous phase solution. Consequently, it tends to be difficult to produce desired coagulated latex particles in high yield. However, in the present invention, by incorporating a dispersant in the side of an aqueous phase, polymer latex droplets are extremely smoothly taken in the aqueous phase without staying in the vicinity of the surface of the aqueous phase solution. As a result, secondary aggregation due to collisions between latex droplets in the vicinity of the surface of the aqueous phase solution can be significantly suppressed. Furthermore, by adding a dispersant in the aqueous phase, the latex droplets (coagulated latex particles) that have entered the aqueous phase can be dispersed stably. Therefore, when the granulation process is performed particularly under the condition of a temperature equal to or higher than the polymer softening temperature at which coagulated latex particles become sticky, secondary aggregation between coagulated latex particles caused inside the aqueous phase can be suppressed.

In the present invention, the term "physical gel" means a gel containing physical crosslinking formed by hydrogen bonds, ionic bonds, or the formation of chelates between polymer molecules. The phrase "having a physical gel-forming property" means having a property that a change from a viscous fluid (sol) to an elastomer (gel) can be visually observed when an operation for gelation, for example, the addition of an inorganic salt or acid or heating, is performed to an aqueous solution containing only a water-soluble polymer compound. The term "water-soluble polymer compound having a physical gel-forming property" is defined as a water-soluble polymer compound having the above property.

The water-soluble polymer compound having the physical gel-forming property usable in the present invention is not particularly limited as long as the above property can be exhibited. For example, a water-soluble polymer compound composed of a compound or a mixture containing two or more compounds selected from the following group can be used. Examples thereof include water-soluble alginic acid derivatives such as alginic acid, sodium alginate, potassium alginate, and ammonium alginate; hydroxyethylmethylcellulose; hydroxypropylmethylcellulose; carboxymethylcellulose; agar; gelatin; carrageenan; glucomannan ; pectin; curdlan; gellan gum; and polyacrylic acid derivatives. In order to achieve the object of the present invention, among these, carboxymethylcellulose, water-soluble alginic acid derivatives, and polyacrylic acid derivatives are more preferable. Among these, water-soluble alginic acid derivatives are most preferably used.

Examples of the water-soluble alginic acid derivatives include alginic acid, sodium alginate, potassium alginate, and ammonium alginate, but are not limited to these as long as the derivatives have a property of forming a physical gel by reacting with a polyvalent metal salt or an acid. The ratio between mannuronic acid and guluronic acid in the water-soluble alginic acid derivative is not particularly limited. However, a higher ratio of guluronic acid is preferable because the ability of forming a physical gel tends to increase. Therefore, the ratio of guluronic acid in the water-soluble alginic acid derivative is generally at least 5 percent by weight and more preferably at least 30 percent by weight.

Also, the molecular weight of the water-soluble polymer compound represented by the above water-soluble alginic acid derivatives is not particularly limited. In view of the liquid transferring property during production, the viscosity of a 1.0 percent by weight aqueous solution measured with a B-type viscometer is preferably 2 to 22,000 mPa·s and more preferably 2 to 1,000 mPa·s.

The content of the water-soluble polymer compound having the physical gel-forming property in the present invention is not particularly limited as long as the object of the present invention can be achieved. However, from the above-described viewpoint, the content is preferably 0.01 to 3.0 parts by weight, more preferably 0.01 to 1.8 parts by weight, particularly preferably 0.05 to 1.8 parts by weight, and most preferably 0.1 to 1.5 parts by weight relative to 100 parts by weight of the polymeric solid content in a polymer latex. When the content of the water-soluble polymer compound having the physical gel-forming property in the present invention is less than 0.01 parts by weight relative to 100 parts by weight of the polymeric solid content in the polymer latex, the effect of stabilizing the shape of polymer latex droplets sprayed or added dropwise, the effect being caused by gelation of the water-soluble polymer compound in the vicinity of the surface of the aqueous phase solution, becomes insufficient. Consequently, the shape of coagulated latex particles easily becomes irregular and fine particles are easily produced. Thus, it may be difficult to obtain a powder having satisfactory powder properties. On the other hand, when the content of the water-soluble polymer compound having the physical gel-forming property exceeds 3.0 parts by weight, a large amount of substance derived from the water-soluble polymer remains in the recovered coagulated latex particles. In such a case, the quality such as thermal stability tends to be degraded. Furthermore, the viscosity of the mixed latex increases, which may result in a difficulty in handleability such as the liquid transferring property.

Japanese Unexamined Patent Application Publication No. 52-37987 discloses a process of adding a high-molecular-weight polyanion having a carboxyl group and/or a hydroxyl group in its molecule to a rubber latex, and adding dropwise the mixed latex to an aqueous solution containing at least one alkaline earth metal as a process for granulating a rubbery polymer latex that is extremely difficult to recover in a particle form.

According to the description of this process, at least 2.0 parts by weight and preferably 4.0 parts by weight of the high-molecular-weight polyanion must be added relative to 100 parts by weight of the polymeric solid content in the rubber latex. The followings are described as the main reasons. (I) When the content of the high-molecular-weight polyanion is less than 2 parts by weight, , the sealing effect of the rubber by a film (gel) of an alkaline earth metal salt of the high-molecular-weight polyanion is not sufficient. (II) The viscosity of the mixed latex is below the range of 1,000 to 3,000 mPa·s, which is the most preferable range, and the shape of the rubber is changed to an irregular shape by an impact when the mixed latex droplets enter a liquid-phase from a gas phase.

According to the present invention, even when the content of the water-soluble polymer compound having the physical gel-forming property is extremely lower than the content in the above-described invention, for example, even when the content is 0.01 to 1.8 parts by weight relative to 100 parts by weight of the polymeric solid content in the polymer latex, desired coagulated latex particles can be produced in high yield. This can be achieved only by incorporating a dispersant in an aqueous phase so that polymer latex droplets can extremely smoothly enter the aqueous phase without staying in the vicinity of the surface of the aqueous phase solution. In other words, it is supposed that, in the technique described in Japanese Unexamined Patent Application Publication No. 52-37987, both effects of stabilization of the shape of latex droplets and smooth entering of the latex droplets from the surface of the aqueous phase solution to the inside of the aqueous phase must be imparted by adding only a high-molecular-weight polyanion, and thus a large amount of high-molecular-weight polyanion, i.e., at least 2.0 parts by weight and preferably 4.0 parts by weight of the high-molecular-weight polyanion must be added relative to 100 parts by weight of the polymeric solid content.

In contrast, in the present invention, it is believed that an effect that the latex droplets smoothly enter the inside of the aqueous phase can be imparted by incorporating a dispersant in an aqueous phase. Therefore, even when the amount of the water-soluble polymer compound having the physical gel-forming property that is incorporated in the polymer latex is drastically reduced, desired coagulated latex particles can be produced in high yield. In fact, it is sufficient that the viscosity of polymer latex containing a water-soluble polymer compound having the physical gel-forming property in the present invention is generally less than 200 mPa·s. Thus, the present invention is essentially different from the above-described technique in which the increase in the viscosity of a mixed latex allows the spherical shape of the particles to be maintained against collisions on the liquid surface.

In the present invention, a method for incorporating a water-soluble polymer compound having the physical gel-forming property in the polymer latex is not particularly limited. For example, an aqueous solution of the water-soluble polymer compound may be separately prepared and a predetermined amount of the aqueous solution may be added to a polymer latex after polymerization. This method is preferable because of simple operation. However, the method is not limited thereto. For example, a predetermined amount of water-soluble polymer compound in the form of aqueous solution or powder may be added to a polymer latex all together or continuously before or in the course of polymerization or the like as long as an adverse effect in polymerization process, for example, gelation is not caused.

When a water-soluble polymer compound in the form of aqueous solution is incorporated in a polymer latex, the concentration of the aqueous solution of the water-soluble polymer compound is preferably 0.01 to 10 percent by weight. When the concentration of the aqueous solution of the water-soluble polymer compound is less than 0.01 percent by weight, a large amount of aqueous solution must be added to the polymer latex in order to add a predetermined amount of the water-soluble polymer compound, and thus the load of wastewater treatment tends to increase. On the other hand, when the concentration of aqueous solution of the water-soluble polymer compound exceeds 10 percent by weight, the viscosity of the aqueous solution of the water-soluble polymer compound is increased. In such a case, the operationality may be impaired. The mixing operation of the polymer latex and the water-soluble polymer compound is easily performed by adding an aqueous solution of the water-soluble polymer compound to the polymer latex and then stirring or mixing the whole for about a few minutes.

The dispersant in the present invention is defined as a dispersant that can impart the effect of allowing the latex droplets to smoothly enter from the vicinity of the surface of an aqueous phase solution to the inside of the aqueous phase and that has the effect of stably dispersing coagulated latex particles that have entered the aqueous phase. The dispersant in the present invention is not particularly limited as long as the dispersant has the above properties. Examples of the dispersant include anionic surfactants, nonionic polymer surfactants, nonionic surfactants, ampholytic surfactants, cationic surfactants, and inorganic dispersants such as calcium tertiary phosphate and magnesium hydroxide. Among these, from the viewpoint that the above effects can be significantly achieved, nonionic polymer surfactants and/or anionic surfactants are preferred and anionic surfactants are most preferably used. These may be appropriately used alone or in combinations of two or more of the surfactants.

The reason that anionic surfactants are most preferably used is that when an aqueous suspension of coagulated latex particles after coagulation is dehydrated by filtration, filterability tends to be superior to that of the case where other dispersants are used. However, with respect to the effect of allowing latex droplets to smoothly enter from the vicinity of the surface of the aqueous phase solution to the inside of the aqueous phase, there is no significant difference between use of anionic surfactants and use of nonionic polymer surfactants or other dispersants. Therefore, the dispersant is not limited to anionic surfactants.

Examples of nonionic polymer surfactants that can be used for the above purpose include nonionic polymer surfactants composed of a compound or a mixture containing two or more compounds selected from the following group. Examples thereof include partially saponified poly(vinyl alcohol), polyacrylic acid and salts thereof, methylcellulose, hydroxymethylcellulose, hydroxyethylcellulose, poly(vinyl pyrrolidone), poly(vinylimidazole), acrylamide, and sulfonated polystyrene. Among these compounds, from the viewpoint of high effect of suppressing secondary aggregation between coagulated latex particles, partially saponified poly(vinyl alcohol), methylcellulose, hydroxymethyl cellulose, and polyalkylene oxides are preferred. Partially saponified poly(vinyl alcohol) can be more preferably used. However, the nonionic polymer surfactant is not limited to these.

Examples of anionic surfactants that can be used for the above purpose include anionic surfactants composed of a compound or a mixture containing two or more compounds selected from the following group. Specific examples of anionic surfactants include carboxylates such as aliphatic monocarboxylates, polyoxyethylene alkyl ether carboxylates, N-alkyl sarcosinate, and N-acyl glutamate; sulfonates such as dialkylsulfosuccinates, alkane sulfonates, alpha olefin sulfonates, linear alkylbenzene sulfonates, branched alkylbenzene sulfonates, naphthalene sulfonate-formaldehyde condensate, alkylnaphthalene sulfonates, and N-methyl-N-acyl taurine salt; sulfate ester salts such as alkyl sulfate ester salts, alcohol ethoxy sulfates, and sulfate ester salts of fats and oils; and phosphate ester salts such as alkyl phosphates, polyoxyethylene alkyl ether phosphates, and polyoxyethylene alkylphenyl ether phosphates. Among these, from the viewpoint that the effect of suppressing secondary aggregation between coagulated latex particles is high, sulfonates, sulfate ester salts, and phosphate ester salts are preferably used, and sulfonates and sulfate ester salts are more preferably used. More specifically, examples of sulfonates and sulfate ester salts usable in the present invention include, but are not limited to, sodium lauryl sulfate, ammonium lauryl sulfate, sodium dodecylbenzenesulfonate, and sodium dioctyl sulfosuccinate.

When these anionic surfactants are added to an aqueous phase containing a divalent or higher inorganic salt serving as a coagulant, the anionic surfactants may be reacted with the inorganic salt to form a water-insoluble salt. However, even in such a case, the effect of allowing latex droplets to smoothly enter from the vicinity of the surface of the aqueous phase solution to the inside of the aqueous phase is satisfactorily exhibited and thus the anionic surfactants can be used for the purpose of the present invention.

In the present invention, the content of the dispersant in an aqueous phase is preferably 0.001 to 10 parts by weight, more preferably 0.005 to 5 parts by weight, and most preferably 0.01 to 3 parts by weight relative to 100 parts by weight of polymeric solid content in a polymer latex. When the content of the dispersant in the aqueous phase is less than 0.001 parts by weight relative to 100 parts by weight of the polymeric solid content, the effect of allowing latex droplets to smoothly enter from the vicinity of the surface of the aqueous phase solution to the inside of the aqueous phase is decreased and the effect of suppressing the coalescence (secondary aggregation) due to collisions between the latex droplets in the vicinity of the surface of the aqueous phase solution tends to be difficult to be achieved. On the other hand, when the content of the dispersant in the aqueous phase exceeds 10 parts by weight relative to 100 parts by weight of the polymeric solid content, while secondary aggregation of coagulated latex particles can be suppressed, a large amount of dispersant remains in the recovered coagulated latex, which may adversely affect the quality such as thermal stability.

In the present invention, a method for adding the dispersant is not particularly limited. Examples of the method includes, but is not limited to, a method in which a predetermined amount of dispersant is previously added in an aqueous phase and a method in which a dispersant is continuously added according to the amount of spray or dropwise addition of the polymer latex. Preferably, in view of simple operation, an aqueous solution of the dispersant having a predetermined concentration is prepared and is then used. But the method is not limited thereto. The concentration of the aqueous solution of dispersant is, for example, 0.01 to 10 percent by weight.

The coagulant (gelling agent) usable in the present invention should be a substance having both properties of coagulating the latex and causing a gelation of the water-soluble polymer compound. Examples of the coagulant include inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; organic acids such as acetic acid and formic acid; and organic acid salts such as sodium acetate, calcium acetate, sodium formate, and calcium formate; which may be used alone or in combinations. Among these, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; inorganic acids such as hydrochloric acid, sulfuric acid, nitric acid, and phosphoric acid; and organic acids such as acetic acid and formic acid can be preferably used alone or in combinations of two or more of the coagulants.

In the present invention, when a water-soluble alginic acid derivative is used as the water-soluble polymer compound having the physical gel-forming property, calcium chloride, ferrous sulfate, ferrous chloride, ferric chloride, ferric sulfate, aluminum sulfate, or the like can be suitably used as the coagulant (gelling agent) in view of obtaining a strong physical gel. Among these, calcium chloride can be more suitably used.

The amount of coagulant (gelling agent) used is not necessarily limited but is preferably 0.2 to 20 parts by weight and more preferably 0.5 to 15 parts by weight relative to 100 parts by weight of the polymeric solid content in the polymer latex. When the amount of coagulant (gelling agent) used is less than 0.2 parts by weight relative to 100 parts by weight of the polymeric solid content in the polymer latex, the latex may be coagulated insufficiently. When the amount of coagulant (gelling agent) used exceeds 20 parts by weight, the coagulation property is not affected but the amount of coagulant (gelling agent) in wastewater increases and thus the load of wastewater treatment tends to increase.

In a method for adding the coagulant (gelling agent) in the present invention, it is sufficient that polymer latex droplets that have entered the aqueous phase can coagulate to form the coagulated latex particles. Examples of the method include, but are not limited to, a method of previously incorporating a predetermined amount of coagulant in the aqueous phase and a method of continuously adding a predetermined amount of coagulant to the aqueous phase in accordance with the supply of the latex. In view of simple operation, preferably, a 0.01 to 50 percent by weight aqueous solution of the coagulant (gelling agent) is prepared in advance and is used, but the method is not limited thereto.

In the present invention, the granulation temperature is not particularly limited. However, from the viewpoint that generation of fine particles can be suppressed, the granulation is preferably performed in a temperature range higher than the temperature 20°C lower than the polymer softening temperature and more preferably in a temperature range higher than the temperature 10°C lower than the polymer softening temperature. The upper limit of the granulation temperature is not particularly set. However, when water is used as a medium, the granulation is preferably performed at 100°C or lower in view of its operationality.

In the known granulation processes, in order to produce coagulated latex particles having a desired particle size in high yield, it is important to suppress secondary aggregation and generation of fine particles. For this purpose, it is essential to perform an operation in a granulation temperature range (generally, from about the polymer softening temperature to a temperature about 10°C lower than the polymer softening temperature) in which the influences of both are minimized. However, in the present invention, use of the dispersant can suppress secondary aggregation between coagulated latex particles. Therefore, desired coagulated latex particles can be recovered in extremely high yield even at a temperature higher than the polymer softening temperature. Consequently, the operationality is advantageously improved. Furthermore, with respect to polymer latices which have a polymer softening temperature of 0°C or lower and which are hitherto difficult to granulate, desired coagulated latex particles can be obtained in extremely high yield under a mild temperature condition (for example, about 30°C).

In the present invention, the term "polymer softening temperature" means a heating temperature of an aqueous suspension containing aggregated polymer particles prepared by a salting-out technique at which the water content of the resulting aggregated polymer particles is at least 5 percent by weight lower than water content of unheated aggregated polymer particles. The polymer softening temperature can be measured by the following method: First, dialysis tubes are each filled with a polymer latex and both ends of each of the dialysis tubes are tied. The dialysis tubes are immersed in an aqueous solution containing 3 percent by weight of calcium chloride at a liquid temperature of 1°C for 8 hours to complete the coagulation. As a result, tubular coagula are prepared. The resulting tubular coagula are heated in hot water, for example, at 5°C to 60°C with an interval of 5°C for 10 minutes. The tubular coagulum heated at each temperature is dried in a hot air convection dryer to evaporate water. The water content of each tubular coagulum is determined from the weight of the tubular coagulum before drying and the weight of the dried tubular coagulum. A temperature at which the water content is at least 5 percent by weight lower than the water content of the unheated polymer particles is defined as the polymer softening temperature.

In the present invention, a polymer latex containing a water-soluble polymer compound having the physical gel-forming property (hereinafter also referred to as mixed latex) is sprayed or added dropwise and then enters in an aqueous phase while the shape of the droplets in this state is maintained, thus performing coagulation. The size of droplets when the mixed latex is sprayed or added dropwise may be freely controlled according to the supply form of dried particles, i.e., a product. The volume-average droplet size is generally 50 μm to 5 mm and preferably 75 μm to 3 mm. The size of droplets when the mixed latex is sprayed or added dropwise can be indirectly determined by measuring the volume-average particle size of resulting coagulated latex particles with a MICROTRAC FRA-SVRSC (manufactured by NIKKISO Co., Ltd.).

In the present invention, when the mixed latex is sprayed or added dropwise, the height from the liquid level of the aqueous phase solution to the position of spray or dropwise addition is not particularly limited. However, considering the operationality and the cost of equipment, the height is preferably in a range of 0.5 cm to 5 m and more preferably 2 cm to 1 m.

In the present invention, an aqueous suspension of coagulated latex particles prepared by completing granulation may be heated according to need so that agglomeration between polymer particles in the coagulated latex particles is accelerated by the heat treatment. Although the upper limit of the temperature during the heat treatment is not particularly set, in general, the heat treatment temperature is preferably up to 120°C in view of its easy operation. Thereby, the mechanical strength of the coagulated latex particles further increases and, in addition, the water content decreases. When the granulation is performed at a temperature higher than the polymer softening temperature, this treatment need not be performed in some cases because the same effect as that in the above heat treatment can be achieved in the granulation process. In the heat treatment, a treatment for preventing agglomeration may be performed in order to suppress aggregation between particles during heating and during drying (or after drying).

Subsequently, dehydrating and drying operations are carried out according to conventional methods. Thus, coagulated latex particles of the present invention can be recovered in a powder form.

In the process for producing coagulated latex particles of the present invention, according to need, additives such as an antioxidant, a heat stabilizer, an ultraviolet absorber, a pigment, an antistatic agent, and a lubricant may be appropriately added in any steps of the production process of the present invention, for example, to a polymer latex or an aqueous suspension of coagulated latex particles obtained after coagulation process.

The coagulated latex particles produced by the present invention can exhibit an excellent effect when used as, for example, an impact modifier for thermoplastic resins such as vinyl chloride resins, (meth)acrylic resins, styrene resins, carbonate resins, amide resins, ester resins, and olefin resins and thermosetting resins such as phenolic resins, epoxy resins, unsaturated ester resins, urea resins, and melamine resins.

EXAMPLES

The present invention will now be described in further detail on the basis of examples, but the present invention is not limited to these examples.

(Measurement of polymer softening temperature)

A polymer latex (15 g) was charged in each dialysis tube (Spectra/Por 4, MWCO 12,000-14,000, φ16 mm x 25 mm x 30 mm, manufactured by Funakoshi Co., Ltd.) of which one end was tied, and another end was then tied so that the dialysis tube has a sausage shape. The dialysis tubes were immersed in 3,000 g of an aqueous solution containing 3 percent by weight of calcium chloride at a liquid temperature of 1°C for 8 hours to complete the coagulation. Thus, tubular coagula are prepared. The resulting tubular coagula were heated in hot water at 5°C to 60°C with an interval of 5°C for 10 minutes. Each heated tubular coagulum at each temperature was dried in a hot air convection dryer at 100°C for 12 hours to evaporate water. The water content was determined by equation 1:

$$\text{Water content (\%)} = [(Wa - Wb)/Wa] \times 100 \quad \text{(equation 1)}$$

wherein Wa represents the weight of the tubular coagulum before drying and Wb represents the weight of the dried tubular coagulum. A temperature at which the water content was at least 5 percent by weight lower than the water content of unheated polymer particles was defined as the polymer softening temperature.

With respect to polymer latices in which the water content of the tubular coagulum was drastically decreased while coagulation was performed with the aqueous solution of calcium chloride at a liquid temperature of 1°C and the water content was no longer decreased at least 5 percent by weight in hot water at not less than 5°C for 10 minutes, the polymer softening temperature was defined as 0°C or lower.

(Measurement of fine particle content)

The particle size distribution of coagulated latex particles in a suspension prepared in each of Examples 1 to 15 and Comparative Examples 1 to 5 was measured with a MICROTRAC FRA-SVRSC (manufactured by NIKKISO Co., Ltd.). The fine particle content (percent by weight) was determined from the cumulative frequency (%) of particles having a diameter of less than 50 $\mu$m.

(Measurement of coarse particle content)

A suspension (1,000 g) (solid content: about 10 percent by weight) containing coagulated latex particles prepared in each of Examples 1 to 15 and Comparative Examples 1 to 5 was subjected to suction filtration with an aspirator. Subsequently, the dehydrated resin was recovered and dried at 50°C for 24 hours in a hot air convection dryer to evaporate water. The resulting dried particles were classified with a 16-mesh sieve. The coarse particle content (percent by weight) was determined by the following (equation 2):

```
Coarse particle content (%) = [(W1)/(W1 + W2)] × 100

(equation 2)
```

wherein W1 represents the weight of the dried particles remaining on the 16-mesh sieve and W2 represents the weight of the dried particles passing through the 16-mesh sieve.

(Ratio of recovery of coagulated latex particles)

In coagulated latex particles prepared in each example and each comparative example, a ratio (percent by weight) of recovery of coagulated latex particles was determined from the cumulative frequency (%) (fine particle content (% by weight)) of particles having a diameter of less than 50 $\mu$m, the particles being measured with the MICROTRAC FRA-SVRSC (manufactured by NIKKISO Co., Ltd.), and the weight (coarse particle content (% by weight)) of dried particles remaining on a 16-mesh sieve as a result of classifying the dried particles with the 16-mesh sieve by the following (equation 3) :

```
Ratio of recovery (% by weight) = 100 - fine particle

content (% by weight) - coarse particle content (% by

weight) (equation 3)
```

(Blocking resistance)

Dried particles (30 g) (drying condition: 50°C × 12 hours; sieve: 16-mesh pass) of coagulated latex particles prepared in each of Examples 1 to 15 and Comparative Examples 1 to were placed in a cylindrical container with a diameter of 5 cm, and a load of 0.3 kg/cm$^2$ was applied at 60°C. The particles were kept in a thermostatic chamber at 60°C for 2 hours while the load was applied. Subsequently, the particles were left to cool at 25°C for 2 hours to prepare a block. The collapse ratio of the resulting block was measured with a powder tester PT-R (manufactured by Hosokawa Micron Corporation) by applying a vibration for 60 seconds with a vibration strength of 2.2 and an opening of sieve mesh of 750 $\mu$m. The collapse ratio of the block was determined by the following (equation 4) :

$$\text{Collapse ratio (\%)} = [(W3 - W4)/W3] \times 100 \quad \text{(equation 4)}$$

wherein W3 represents the weight of the block before the vibration and W4 represents the weight of the block remaining on the sieve after the vibration.

In the evaluation, a powder having a collapse ratio of 90% or more was evaluated as excellent, a powder having a collapse ratio of 80% or more and less than 90% was evaluated as good, a powder having a collapse ratio of 60% or more and less than 80% was evaluated as fair, and a powder having a collapse ratio of less than 60% was evaluated as poor.

(Flowability indices of powder)

Angle of repose, angle of fall, angle of spatula, aerated bulk density, packed bulk density, cohesion, dispersity, angle of difference, compressibility, and uniformity of dried particles (drying condition: 50°C × 12 hours; sieve: 16-mesh pass) of coagulated latex particles prepared in each of Examples 1 to 15 and Comparative Examples 1 to 5 were measured with a powder tester PT-R (manufactured by Hosokawa Micron Corporation) in accordance with the Carr's method for evaluating flowability (Chemical Engineering, 1965, Vol. 18, pp. 163-168). The degree of flowability was determined from the resulting flowability indices.

In the evaluation, a powder having flowability indices of 80 points or more was evaluated as excellent, a powder having flowability indices of 70 points or more and less than 80 points was evaluated as good, a powder having flowability indices of 60 points or more and less than 70 points was evaluated as fair, and a powder having flowability indices of less than 60 points was evaluated as poor.

(Filtration rate)

An aqueous suspension (3,000 g) (polymeric solid content: 10 percent by weight) containing coagulated latex particles prepared in each of Examples 1 to 15 and Comparative Examples 1 to 5 was subjected to suction filtration with an aspirator (filter paper: FILTER PAPER No. 2, 150 mm in diameter, manufactured by ADVANTEC). When the time required for filtration was 60 seconds or shorter, the powder was evaluated as good. When the time required for filtration was longer than 60 seconds and within 90 seconds, the powder was evaluated as fair. When the time required for filtration was longer than 90 seconds, the powder was evaluated as poor.

(Preparation of polymer latex A)

Deionized water (210 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of butyl acrylate (hereinafter also referred to as BA) (8.5 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a mixture containing BA (83.0 parts by weight), allyl methacrylate (hereinafter also referred to as AMA) (0.5 parts by weight), and cumene hydroperoxide (0.01 parts by weight) was added dropwise to the mixture over a period of 5 hours. Furthermore, during the addition of the mixture, an aqueous solution of 5 percent by weight sodium lauryl sulfate, the aqueous solution containing 1 part by weight of sodium lauryl sulfate, was continuously added over a period of 4 hours. After the mixture was added, stirring was continued for 1.5 hours to prepare a crosslinked acrylic rubber polymer. A mixture containing methyl methacrylate (hereinafter also referred to as MMA) (8.0 parts by weight) serving as a graft monomer component and cumene hydroperoxide (0.01 parts by weight), was continuously added to the crosslinked acrylic rubber polymer at 50°C over a period of 30 minutes. After the addition, cumene hydroperoxide (0.1 parts by weight) was added and stirring was continued for 1 hour to complete polymerization. Thus, a polymer latex A having a volume-average particle size of 0.175 μm, a polymeric solid content of 30 percent by weight, and a polymer softening temperature of 25°C was prepared.

(Preparation of polymer latex B)

Deionized water (210 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of BA (8.5 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a mixture containing BA (89.0 parts by weight), AMA (0.5 parts by weight), and cumene hydroperoxide (0.01 parts by weight) was added dropwise to the mixture over a period of 5 hours. Furthermore, during the addition of the mixture, an aqueous solution of 5 percent by weight sodium lauryl sulfate, the aqueous solution containing 1 part by weight of sodium lauryl sulfate, was continuously added over a period of 4 hours. After the mixture was added, stirring was continued for 1.5 hours to prepare a crosslinked acrylic rubber polymer. A mixture containing MMA (2.0 parts by weight) serving as a graft monomer component and cumene hydroperoxide (0.01 parts by weight) was continuously added to the crosslinked acrylic rubber polymer at 50°C over a period of 30 minutes. After the addition, cumene hydroperoxide (0.1 parts by weight) was added and stirring was continued for 1 hour to complete polymerization. Thus, a polymer latex B having a volume-average particle size of 0.175 μm, a polymeric solid content of 30 percent by weight, and a polymer softening temperature of 0°C or lower was prepared.

(Preparation of polymer latex C)

Deionized water (200 parts by weight), sodium soap produced from beef tallow (2 parts by weight), ferrous sulfate (0.002 parts by weight), disodium ethylenediaminetetraacetate (0.005 parts by weight), potassium tertiary phosphate (0.2 parts by weight), sodium formaldehyde sulfoxylate (0.2 parts by weight), butadiene (80 parts by weight), styrene (20 parts by weight), and diisopropylbenzene hydroperoxide (0.1 parts by weight) were fed in a pressure-resistant polymerization container equipped with a stirrer, and polymerization was performed at 40°C for 15 hours. Thus, a rubber latex with a rate of polymerization conversion of 99% was prepared. The resulting rubber latex (278 parts by weight) (polymeric solid content: 92 parts by weight), water (25 parts by weight), sodium soap produced from beef tallow (0.2 parts by weight), ferrous sulfate (0.002 parts by weight), disodium ethylenediaminetetraacetate (0.004 parts by weight), sodium formaldehyde sulfoxylate (0.1 parts by weight), methyl methacrylate (4.0 parts by weight), and styrene (4.0 parts by weight) were fed in a polymerization container equipped with a stirrer, and polymerization was performed at 60°C for 4 hours. Thus, a polymer latex C having a rate of polymerization conversion of 99%, a polymeric solid content of 32 percent by weight, and a polymer softening temperature of 0°C or lower was produced.

(EXAMPLE 1)

An aqueous solution of sodium alginate (ALGITEX H, manufactured by Kimica Corporation) (having an aqueous solution viscosity of 500 mPa·s measured with a B-type viscometer) with a concentration of 1.0 percent by weight was added to the polymer latex A (polymeric solid content: 100 parts by weight) so that the solid content of sodium alginate was 0.4 parts by weight relative to 100 parts by weight of the polymeric solid content. The whole mixture was homogeneously mixed by stirring to prepare a mixed latex. The viscosity of the mixed latex was determined to 180 mPa·s by measuring with a B-type viscometer.
Separately, calcium chloride (6 parts by weight) and a 3.0 percent by weight aqueous solution of partially saponified poly(vinyl alcohol) (KH-17, manufactured by Nippon Synthetic Chemical Industry Co., Ltd.) were added to 660 parts by weight of water relative to 100 parts by weight of the polymeric solid content so that the solid content of partially saponified poly(vinyl alcohol) was 0.4 parts by weight relative to 100 parts by weight of the polymeric solid content. The calcium chloride was dissolved and the temperature was then adjusted to 30°C to prepare an aqueous phase of a coagulation bath.
The mixed latex was sprayed into droplets from a height of 30 cm from the liquid level of the aqueous phase of the coagulation bath toward the surface of the aqueous phase solution of the coagulation bath using a spiral flow-type cone nozzle, which is one of pressure nozzles, so that the droplets have a volume-average droplet size of 200 μm. The nozzle diameter was 0.6 mm and the spraying pressure was 3.7 kg/cm$^2$. During the spray, the temperature of the coagulation bath was constantly adjusted to 30°C.
An aqueous solution of potassium palmitate with a concentration of 5 percent by weight was added to the resulting aqueous suspension (polymeric solid content: about 10 percent by weight) of coagulated latex particles so that the solid content of potassium palmitate was 1.0 part by weight relative to 100 parts by weight of the polymeric solid content. Thus, a treatment for preventing agglomeration between the coagulated latex particles was performed. The mixture was then heated to 70°C with stirring to perform heat treatment. Subsequently, the mixture was dehydrated and dried (50°C × 12 hours) to recover the coagulated latex particles.

(EXAMPLE 2)

The process was performed as in Example 1 except that the amount of sodium alginate added was 0.1 parts by weight relative to 100 parts by weight of the polymeric solid content.

(EXAMPLE 3)

The process was performed as in Example 1 except that the amount of sodium alginate added was 1.5 parts by weight relative to 100 parts by weight of the polymeric solid content.

(EXAMPLE 4)

The process was performed as in Example 1 except that the amount of partially saponified poly(vinyl alcohol) added was 0.005 parts by weight relative to 100 parts by weight of the polymeric solid content.

(EXAMPLE 5)

The process was performed as in Example 1 except that the temperature of the aqueous phase of the coagulation bath was adjusted to 40°C.

(EXAMPLE 6)

The process was performed as in Example 1 except that the temperature of the aqueous phase of the coagulation bath was adjusted to 50°C.

(EXAMPLE 7)

The process was performed as in Example 1 except that the temperature of the aqueous phase of the coagulation bath was adjusted to 20°C.

(EXAMPLE 8)

The process was performed as in Example 1 except the following: In place of partially saponified poly(vinyl alcohol), a 3.0 percent by weight aqueous solution of sodium lauryl sulfate (EMAL 2F NEEDLE, manufactured by Kao Corporation) was added so that the solid content of sodium lauryl sulfate was 0.4 parts by weight relative to 100 parts by weight of the polymeric solid content.

(EXAMPLE 9)

The process was performed as in Example 1 except the following: In place of partially saponified poly(vinyl alcohol), a 3.0 percent by weight aqueous solution of sodium dodecylbenzenesulfonate (NEOPELEX G-15, manufactured by Kao Corporation) was added so that the solid content of sodium dodecylbenzenesulfonate was 0.4 parts by weight relative to 100 parts by weight of the polymeric solid content.

(EXAMPLE 10)

The process was performed as in Example 1 except the following: In place of partially saponified poly(vinyl alcohol), a 3.0 percent by weight aqueous solution of sodium dioctyl sulfosuccinate (PELEX OT-P, manufactured by Kao Corporation) was added so that the solid content of sodium dioctyl sulfosuccinate was 0.4 parts by weight relative to 100 parts by weight of the polymeric solid content.

(EXAMPLE 11)

The process was performed as in Example 1 except the following: in place of sodium alginate, an aqueous solution of hydroxypropylmethylcellulose (60SH-4000, manufactured by Shin-Etsu Chemical Co., Ltd.) (having an aqueous solution viscosity of 4,000 mPa·s measured with a B-type viscometer) with a concentration of 2.0 percent by weight was added so that the solid content of hydroxypropylmethylcellulose was 0.4 parts by weight relative to 100 parts by weight of the polymeric solid content.

(EXAMPLE 12)

The process was performed as in Example 1 except that the polymer latex B was used.

(EXAMPLE 13)

The process was performed as in Example 8 except that the polymer latex B was used.

(EXAMPLE 14)

The process was performed as in Example 1 except that the polymer latex C was used.

(EXAMPLE 15)

An aqueous solution of sodium alginate (ALGITEX H, manufactured by Kimica Corporation) (having an aqueous solution viscosity of 500 mPa·s measured with a B-type viscometer) with a concentration of 1.0 percent by weight was added to the polymer latex B (polymeric solid content: 100 parts by weight) so that the solid content of sodium alginate was 0.4 parts by weight relative to 100 parts by weight of the polymeric solid content. The whole mixture was homogeneously mixed by stirring to prepare a mixed latex. The viscosity of the mixed latex was determined to 180 mPa·s by measuring with a B-type viscometer.
Separately, calcium chloride (6 parts by weight) and a 10.0 percent by weight aqueous solution of sodium lauryl sulfate (EMAL 2F NEEDLE, manufactured by Kao Corporation) were added to 660 parts by weight of water relative to 100 parts by weight of the polymeric solid content so that the solid content of sodium lauryl sulfate was 1.5 parts by weight relative to 100 parts by weight of the polymeric solid content. The calcium chloride was dissolved and the temperature was then adjusted to 30°C to prepare an aqueous phase of a coagulation bath.
The mixed latex was sprayed into droplets from a height of 30 cm from the liquid level of the aqueous phase of the coagulation bath toward the surface of the aqueous phase solution of the coagulation bath using a spiral flow-type cone nozzle, which is one of pressure nozzles, so that the droplets have a volume-average droplet size of 200 $\mu$m. The nozzle diameter was 0.6 mm and the spraying pressure was 3.7 kg/cm$^2$. During the spray, the temperature of the coagulation bath was constantly adjusted to 30°C.
The resulting aqueous suspension of coagulated latex particles was then heated to 70°C with stirring to perform heat treatment. Subsequently, the aqueous suspension was dehydrated and dried (50°C × 12 hours) to recover the coagulated latex particles.

(EXAMPLE 16)

An aqueous solution of sodium alginate (ALGITEX H, manufactured by Kimica Corporation) (having an aqueous solution viscosity of 500 mPa·s measured with a B-type viscometer) with a concentration of 1.0 percent by weight was added to the polymer latex B (polymeric solid content: 100 parts by weight) so that the solid content of sodium alginate was 0.4 parts by weight relative to 100 parts by weight of the polymeric solid content. The whole mixture was homogeneously mixed by stirring to prepare a mixed latex.
Separately, calcium chloride (6 parts by weight) and a 3.0 percent by weight aqueous solution of partially saponified poly(vinyl alcohol) (KH-17, manufactured by Nippon Synthetic Chemical Industry Co., Ltd.) were added to 660 parts by weight of water relative to 100 parts by weight of the polymeric solid content so that the solid content of partially saponified poly(vinyl alcohol) was 0.4 parts by weight relative to 100 parts by weight of the polymeric solid content. The calcium chloride was dissolved and the temperature was then adjusted to 30°C to prepare an aqueous phase of a coagulation bath.
The mixed latex was added dropwise with a peristaltic pump (AC-2110, manufactured by ATTO Corporation, a tube with an inner diameter of 3.0 mm was used) from a height of 3 cm from the liquid level of the aqueous phase of the coagulation bath toward the surface of the aqueous phase solution of the coagulation bath under stirring. The flow rate was controlled such that about 15 droplets of the mixed latex, the droplets each having a diameter of about 3.0 mm, were added dropwise for 10 seconds. During the dropwise addition, the temperature of the coagulation bath was constantly adjusted to 30°C.
An aqueous solution of potassium palmitate with a concentration of 5 percent by weight was added to the resulting aqueous solution (polymeric solid content: about 10 percent by weight) of coagulated latex particles so that the solid content of potassium palmitate was 1.0 part by weight relative to 100 parts by weight of the polymeric solid content. Thus, a treatment for preventing agglomeration between the coagulated latex particles was performed. The mixture was then heated to 70°C with stirring to perform heat treatment. Subsequently, the mixture was dehydrated and dried (50°C × 12 hours) to recover the coagulated latex particles.

(COMPARATIVE EXAMPLE 1)

The process was performed as in Example 1 except that partially saponified poly(vinyl alcohol) was not used.

(COMPARATIVE EXAMPLE 2)

The process was performed as in Example 1 except that sodium alginate was not used.

(COMPARATIVE EXAMPLE 3)

The process was performed as in Example 12 except that partially saponified poly(vinyl alcohol) was not used.

(COMPARATIVE EXAMPLE 4)

The process was performed as in Example 12 except that partially saponified poly (vinyl alcohol) was not used and 2.0 parts by weight of sodium alginate was added relative to 100 parts by weight of the polymeric solid content.

(COMPARATIVE EXAMPLE 5)

The process was performed as in Example 12 except that sodium alginate was not used.

(COMPARATIVE EXAMPLE 6)

The process was performed as in Example 16 except that partially saponified poly(vinyl alcohol) was not used.
Table 1 shows the granulation conditions (the type of latex, the polymer softening temperature, the type of dispersant and the amount of dispersant added (parts by weight), the type of water-soluble polymer compound (simply described as physical gel in Table 1) having the physical gel-forming property and the amount of water-soluble polymer compound added, and the granulation temperature) for coagulated latex particles produced in the examples and the comparative examples. Table 2 shows evaluation results of the fine particle content (% by weight), the coarse particle content (% by weight), the ratio of recovery (% by weight), the blocking resistance, the powder flowability, and the filtration rate for coagulated latex particles produced in Examples 1 to 15 and Comparative Examples 1 to 5. Table 3 shows the visual evaluation results relating to the shape of the coagulated latex particles and the presence or absence of agglomeration between the particles produced in Example 16 and Comparative Example 6.

[Table 1]

| | Type of latex | Polymer softening temperature | Type of dispersant | Amount of dispersant added Parts by weight | Type of physical gel | Amount of physical gel Parts by weight | Granulation temperature °C |
|---|---|---|---|---|---|---|---|
| Example 1 | A | 25°C | Poly(vinyl alcohol) | 0.4 | Sodium alginate | 0.4 | 30 |
| Example 2 | A | 25°C | Poly(vinyl alcohol) | 0.4 | Sodium alginate | 0.1 | 30 |
| Example 3 | A | 25°C | Poly(vinyl alcohol) | 0.4 | Sodium alginate | 1.5 | 30 |
| Example 4 | A | 25°C | Poly(vinyl alcohol) | 0.005 | Sodium alginate | 0.4 | 30 |
| Example 5 | A | 25°C | Poly(vinyl alcohol) | 0.4 | Sodium alginate | 0.4 | 40 |

(continued)

| | Type of latex | Polymer softening temperature | Type of dispersant | Amount of dispersant added Parts by weight | Type of physical gel | Amount of physical gel Parts by weight | Granulation temperature °C |
|---|---|---|---|---|---|---|---|
| Example 6 | A | 25°C | Poly(vinyl | 0.4 | Sodium alginate | 0.4 | 50 |
| Example 7 | A | 25°C | alcohol) | 0.4 | Sodium alginate | 0.4 | 20 |
| Example 8 | A | 25°C | Sodium lauryl | 0,4 | Sodium alginate | 0.4 | 30 |
| Example 9 | A | 25°C | Sodium dodecylbenzene sulfonate | 0.4 | Sodium alginate | 0.4 | 30 |
| Example 10 | A | 25°C | Sodium dioctyl sulfosuccinate dioctyl | 0.4 | Sodium alginate | 0.4 | 30 |
| Example 11 | A | 25°C | Poly(vinyl alcohol) | 0.4 | Cellulose-base | 0.4 | 30 |
| Example 12 | B | 0°C or lower | Poly(vinyl alcohol) | 0.4 | Sodium alginate | 0.4 | 30 |
| Example 13 | B | 0°C or lower | Sodium lauryl sulfate | 0.4 | Sodium alginate | 0.4 | 30 |
| Example 14 | C | 0°C or lower | Poly(vinyl alcohol) | 0.4 | Sodium alginate | 0.4 | 30 |
| Example 15 | B | 0°C or lower | Sodium lauryl sulfate | 1.5 | Sodium alginate | 0.4 | 30 |
| Example 16 | B | 0°C or lower | Poly(vinyl alcohol) | 0.4 | Sodium alginate | 0.4 | 30 |
| Comparative Example 1 | A | 25°C | Not used | - | Sodium alginate | 0.4 | 30 |
| Comparative Example 2 A Example 2 | A | 25°C | Poly(vinyl alcohol) | 0.4 | Not used | - | 30 |
| Comparative Example 3 | B | 0°C or lower | Not used | - | Sodium alginate | 0.4 | 30 |
| Comparative Example 4 | B | 0°C or lower | Not used | - | Sodium alignate | 2.0 | 30 |
| Comparative Example 5 | B | 0°C or lower | Poly(vinyl | 0.4 | Not used | - | 30 |
| Comparative Example 6 | B | 0°C or lower | Not used | - | Sodium alginate | 0.4 | 30 |

[Table 2]

| | Fine powder content % by weight | Coarse powder content % by weight | Ratio of recovery % by weight | Blocking resistance | Powder flowability | Filtration rate |
|---|---|---|---|---|---|---|
| Example 1 | 2.1 | 5.6 | 92.3 | Good | Good | Fair |
| Example 2 | 1.8 | 7.9 | 90.3 | Good | Good | Fair |
| Example 3 | 0 | 3.7 | 96.3 | Good | Good | Fair |
| Example 4 | 0 | 9.2 | 90.8 | Good | Good | Fair |
| Example 5 | 1.1 | 5.2 | 93.7 | Good | Good | Fair |
| Example 6 | 0.2 | 6.7 | 93.1 | Good | Good | Fair |
| Example 7 | 4.8 | 4.6 | 90.6 | Good | Good | Fair |
| Example 8 | 2.8 | 7.1 | 90.1 | Good | Good | Good |
| Example 9 | 3.2 | 7.7 | 89.1 | Good | Good | Good |
| Example 10 | 2.1 | 4.5 | 93.4 | Good | Good | Good |
| Example 11 | 6.2 | 1.2 | 92.6 | Good | Good | Fair |
| Example 12 | 0.6 | 6.2 | 93.2 | Good | Good | Pair |
| Example 13 | 0 | 9.4 | 90.6 | Good | Good | Good |
| Example 14 | 0.8 | 3.2 | 96.0 | Good | Good | Fair |
| Example 15 | 2.2 | 3.1 | 94.7 | Good | Good | Good. |
| Comparative Example 1 | 2.4 | 21.2 | 76.4 | Good | Fair | Good |
| Comparative Example 2 | 3.7 | 34.6 | 61.7 | Poor | Fair | Fair |
| Comparative Example 3 | 0 | 100 | 0 | - | - | - |
| Comparative Example 4 | 0 | 57.3 | 42.7 | Good | Fair | Good |
| Comparative Example 5 | 0 | 37.7 | 62.3 | Fair | Fair | Fair |

[Table 3]

| | Example 16 | Comparative Example 6 |
|---|---|---|
| Shape of coagulated latex particles | Spherical shape | Irregular shape |
| Agglomeration between particles | Not observed | Observed |

Referring to the examples and the comparative examples, in granulation, by incorporating a water-soluble polymer compound having the physical gel-forming property in a polymer latex and incorporating a dispersant in an aqueous phase containing a coagulant (gelling agent) for spraying or adding dropwise the polymer latex, the coagulated latex particles can be recovered in extremely high yield. Referring to Examples 1, 5, 6, and 7, by employing the method for producing coagulated latex particles of the present invention, the optimum granulation temperature range is greatly extended to a temperature side higher than the polymer softening temperature. As a result, the optimum granulation temperature range becomes very wide, which is advantageous in view of operationality. Furthermore, referring to Examples 12 to 15 and Comparative Examples 3 to 5, with respect to polymer latices which have a polymer softening temperature of (0°C or lower and which are difficult to granulate by known granulation processes, coagulated latex particles having a desired particle size can be recovered in extremely high yield by employing the production process of the present invention.

Comparison between Example 16 and Comparative Example 6 in Table 3 indicates that, by incorporating a dispersant in the aqueous phase, the coagulated latex particles have a spherical shape and, in addition, agglomeration between the particles can be suppressed.

**Claims**

1. A process for producing coagulated latex particles comprising:

   spraying or adding dropwise a polymer latex containing a water-soluble polymer compound having a physical gel-forming property into an aqueous phase containing an inorganic salt and/or an acid, and a dispersant.

2. The process for producing coagulated latex particles according to claim 1, wherein 0.01 to 3.0 parts by weight of the water-soluble polymer compound having a physical gel-forming property is contained in the polymer latex containing 100 parts by weight of the polymeric solid content.

3. The process for producing coagulated latex particles according to claim 2, wherein 0.05 to 1.8 parts by weight of the water-soluble polymer compound having a physical gel-forming property is contained in the polymer latex containing 100 parts by weight of the polymeric solid content.

4. The process for producing coagulated latex particles according to any one of claims 1 to 3, wherein the aqueous phase contains 0.001 to 10 parts by weight of the dispersant relative to 100 parts by weight of the polymeric solid content in the polymer latex.

5. The process for producing coagulated latex particles according to any one of claims 1 to 4, wherein the aqueous phase contains 0.2 to 20 parts by weight of the inorganic salt and/or the acid relative to 100 parts by weight of the polymeric solid content in the polymer latex.

6. The process for producing coagulated latex particles according to any one of claims 1 to 5, wherein the water-soluble polymer compound having a physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

7. The process for producing coagulated latex particles according to any one of claims 1 to 6, wherein the dispersant is a nonionic polymer surfactant and/or an anionic surfactant.

8. The process for producing coagulated latex particles according to claim 7, wherein the nonionic polymer surfactant is at least one compound selected from partially saponified poly(vinyl alcohol) ; polyacrylic acid and salts thereof, methylcellulose, hydroxymethylcellulose, hydroxyethylcellulose, polyalkylene oxides, poly(vinyl pyrrolidone), poly (vinylimidazole), acrylamide, and sulfonated polystyrene.

9. The process for producing coagulated latex particles according to claim 7, wherein the anionic surfactant is at least one compound selected from carboxylates, sulfonates, sulfate ester salts, and phosphate ester salts.

10. The process for producing coagulated latex particles according to any one of claims 1 to 9, wherein the inorganic salt is at least one salt selected from sodium salts, potassium salts, calcium salts, magnesium salts, aluminum salts, iron salts, barium salts, zinc salts, copper salts, potassium alum, and iron alum.

11. The process for producing coagulated latex particles according to any one of claims 1 to 10, wherein the acid is at least one inorganic acid selected from hydrochloric acid, sulfuric acid, nitric acid, and phosphoric acid and/or at least one organic acid selected from acetic acid and formic acid.

12. The process for producing coagulated latex particles according to claim 6, wherein the water-soluble polymer compound having a physical gel-forming property is a water-soluble alginic acid derivative.

13. The process for producing coagulated latex particles according to claim 10, wherein the inorganic salt is a calcium salt.

**14.** The process for producing coagulated latex particles according to any one of claims 1 to 13, wherein droplets of the polymer latex sprayed or added dropwise have a volume-average droplet size of 50 $\mu$m to 5 mm.

**15.** The process for producing coagulated latex particles according to any one of claims 1 to 14, wherein the polymer latex has a polymeric solid content of 10 to 55 percent by weight.

**EP 1 857 491 A1**

## INTERNATIONAL SEARCH REPORT

| | International application No. |
|---|---|
| | PCT/JP2005/022819 |

A. CLASSIFICATION OF SUBJECT MATTER
*C08J3/12*(2006.01), *C08F6/22*(2006.01)

According to International Patent Classification (IPC) or to both national classification and IPC

B. FIELDS SEARCHED

Minimum documentation searched (classification system followed by classification symbols)
C08J3/00-3/28, C08F6/00-6/28

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 52-37987 A  (Toyo Soda Manufacturing Co., Ltd.), 24 March, 1977 (24.03.77), Full text (Family: none) | 1-15 |
| A | JP 62-236828 A  (Toyo Soda Manufacturing Co., Ltd.), 16 October, 1987 (16.10.87), Claims 1; page 3, upper left column, line 19 to lower left column, line 15 (Family: none) | 1-15 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 March, 2006 (02.03.06) | 14 March, 2006 (14.03.06) |

| Name and mailing address of the ISA/ Japanese Patent Office | Authorized officer |
|---|---|
| Facsimile No. | Telephone No. |

Form PCT/ISA/210 (second sheet) (April 2005)

# EP 1 857 491 A1

| INTERNATIONAL SEARCH REPORT | International application No. |
|---|---|
| | PCT/JP2005/022819 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-173002 A (Nippon Zeon Co., Ltd.), 04 July, 1990 (04.07.90), Claims; page 2, lower right column, line 14 to page 3, upper left column, line 8 (Family: none) | 1-15 |
| A | JP 59-199701 A (Terumo Corp.), 12 November, 1984 (12.11.84), Claims 1 to 3 (Family: none) | 1-15 |
| A | JP 49-14550 A (Japan Synthetic Rubber Co., Ltd.), 08 February, 1974 (08.02.74), Claims; page 2, upper left column, line 19 to lower left column, line 8 (Family: none) | 1-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53030647 A
- JP 60217224 A
- JP 52037987 A
- JP 2002363372 A
- JP 2003119396 A

**Non-patent literature cited in the description**

- *Chemical Engineering,* 1965, vol. 18, 163-168